# EUROPEAN PATENT SPECIFICATION

(11) **EP 3 054 127 B1**
(45) Date of publication and mention of the grant of the patent: **06.05.2020**
(21) Application number: 16154942.3
(22) Date of filing: 09.02.2016
(51) Int. Cl.: F02C 7/224, F02C 7/18

(54) **THERMAL MANAGEMENT SYSTEM FOR GAS TURBINE ENGINES**
THERMISCHES MANAGEMENT SYSTEM FÜR GASTURBINENMOTOREN
SYSTÈME DE GESTION THERMIQUE POUR MOTEUR À TURBINE À GAZ

(30) Priority: 09.02.2015 US 201514617834
(43) Date of publication of application: 10.08.2016
(73) Proprietor: United Technologies Corporation, Farmington, CT 06032 (US)
(72) Inventor: SNAPE, Nathan D., Tolland, CT Connecticut 06084 (US); SUCIU, Gabriel L., Glastonbury, CT Connecticut 06033 (US); ACKERMAN, William K., East Hartford, CT Connecticut 06118 (US); HILL, James D., Tolland, CT Connecticut 06084 (US); MERRY, Brian D., Andover, CT Connecticut 06232 (US)
(74) Representative: Dehns

(56) References cited:
- GB-A- 2 095 756
- US-A- 4 773 212
- US-A1- 2004 020 213
- US-A1- 2008 028 763
- US-A1- 2009 169 359
- US-B1- 8 261 527

## Description

### BACKGROUND OF THE INVENTION

### 1. Field of the Invention

The present disclosure relates to gas turbine engines, and more particularly to thermal management systems for gas turbine engines.

### 2. Description of Related Art

Gas turbine engines commonly include components that generate heat, such as from friction between moving elements, like gears and bearings, or from resistive heating, like generators and motors windings. Some gas turbine engines include coolant systems for removing heat from such components and transferring the heat to the environment external to the engine. Such systems typically include a heat sink coupled to heat-generating component by a coolant circuit. The coolant circuit generally circulates a liquid coolant through the heat- generating component, provides heated coolant to the heat sink, and receives chilled coolant from the heat sink for return to the coolant circuit. The heat sink transfers heat from the liquid coolant for dissipation into the external environment, usually through a chill plate with coolant conduits that are in direct fluid communication with the heat-generating component. The heat transfer capability of such devices is typically a function of the temperature differential between the coolant flow and airflow, respective mass flow rates of the coolant flow and airflow, and thermal stress levels imposed by the coolant flow and airflow.

Such conventional methods and systems have generally been considered satisfactory for their intended purpose. However, there is still a need in the art for improved thermal management systems for gas turbine engines. The present disclosure provides a solution for this need.

GB 2095756A, US 4773212 A, US 8261527 B and US 2008/028763 A1 disclose thermal management systems in gas turbine engines.

### SUMMARY OF THE INVENTION

Viewed from one aspect the present invention provides a thermal management system for a gas turbine engine according to claim 1.

Viewed from another aspect the present invention provides a method of cooling an oil circuit for a gas turbine engine according to claim 10.

In one aspect a thermal management system for a gas turbine engine includes a heat exchanger, an oil circuit, and a coolant circuit. The oil circuit is in fluid communication with the heat exchanger. The coolant circuit is in fluid communication with the heat exchanger and in thermal communication with the oil circuit through the heat exchanger to return heat from the oil circuit to a core flow path of a gas turbine engine using a thermally neutral heat transfer fluid.

In certain embodiments the coolant circuit can be carry a charge of thermally neutral heat transfer fluid. The coolant circuit can be a closed circuit such that the thermally neutral heat transfer fluid recirculates through the coolant circuit. It is also contemplated that the oil circuit can be in fluid communication with a lubricated engine component of a gas turbine engine. The lubricated engine component can be a bearing system, a geared architecture, or any other engine component cooled by lubricant.

In accordance with certain embodiments, the heat exchanger can be a first heat exchanger and the thermal management system can include a second heat exchanger. The second heat exchanger can include a fuel conduit to receive heat from the coolant circuit through the second heat exchanger. The fuel conduit can be fluidly coupled between a fuel source and a combustor of the gas turbine engine for heating fuel using heat removed from a lubricated gas turbine engine component.

It is also contemplated that in accordance with certain embodiments the coolant circuit can include an inlet and an outlet. A bypass circuit can be fluidly coupled to the coolant circuit inlet and the coolant outlet, and a third heat exchanger can be in fluid communication with the bypass circuit. The third heat exchanger can include an air channel, and the air channel can be in fluid communication with a bypass duct of the gas turbine engine. A valve can fluidly couple the bypass circuit with the coolant conduit for dividing the flow of heated thermally neutral heat transfer fluid between the coolant circuit and the bypass circuit, thereby warming fuel traversing the second heat exchanger and preventing fuel coking in the combustor.

A gas turbine engine includes a thermal management system as described above. The lubricated engine component is in fluid communication with the oil circuit to return heat from the lubricated engine component to a core gas flow of the gas turbine engine through the heat exchanger and coolant circuit.

In one aspect a method of cooling an oil circuit for a gas turbine engine includes receiving heated lubricant from an oil circuit at a first heat exchanger and transferring heat from the heated lubricant into a thermally neutral heat transfer fluid coolant circuit using the first heat exchanger. The heated thermally neutral heat transfer fluid is received at a second heat exchanger, and heat is transferred from the heated thermally neutral heat transfer fluid into a fuel flow traversing the second heat exchanger. Heat flow into the fuel traversing the second heat exchanger is balanced by diverting a portion of the heated thermally neutral heat transfer fluid into bypass circuit fluidly coupled to the second heat exchanger.

In one embodiment a thermal management system for a gas turbine engine is provided. The thermal management system having a first heat exchanger; an oil circuit in fluid communication with the first heat exchanger; and a coolant circuit in fluid communication with the first heat exchanger and in thermal communication with the oil circuit to return heat from the oil circuit to a core flow path of a gas turbine engine using a thermally neutral heat transfer fluid.

The system includes a lubricated engine component in thermal communication with the oil circuit.

In addition to one or more of the features described above, or as an alternative to any of the foregoing embodiments, the lubricated engine component may include at least one of a bearing system and a geared architecture.

The system further includes a second heat exchanger in fluid communication with the coolant circuit.

In addition to one or more of the features described above, or as an alternative to any of the foregoing embodiments, the second heat exchanger may comprise a fuel conduit to receive heat from the coolant circuit via the second heat exchanger.

In addition to one or more of the features described above, or as an alternative to any of the foregoing embodiments, the coolant circuit may have an inlet and an outlet and the system may further include a bypass circuit fluidly coupled to the inlet and the outlet.

In addition to one or more of the features described above, or as an alternative to any of the foregoing embodiments, a valve may be fluidly coupled between the coolant circuit and the bypass circuit.

In addition to one or more of the features described above, or as an alternative to any of the foregoing embodiments, a third heat exchanger may be in fluid communication with the bypass circuit.

In addition to one or more of the features described above, or as an alternative to any of the foregoing embodiments, an ambient air channel may be in fluid communication with third heat exchanger.

In yet another embodiment a gas turbine engine is provided. The gas turbine engine having: a thermal management system, including: a first heat exchanger; an oil circuit in fluid communication with the first heat exchanger; and a coolant circuit in fluid communication with the first heat exchanger and in thermal communication with the oil circuit; and a lubricated engine component in fluid communication with the oil circuit.

The gas turbine engine further includes a second heat exchanger in fluid communication with the coolant circuit.

In addition to one or more of the features described above, or as an alternative to any of the foregoing embodiments, the second heat exchanger may comprise a fuel conduit to receive heat from the coolant circuit via the second heat exchanger, and the fuel conduit may be in fluid communication with a combustor of the gas turbine engine.

In addition to one or more of the features described above, or as an alternative to any of the foregoing embodiments, the coolant circuit may have an inlet and an outlet, and a bypass circuit may be fluidly coupled to the inlet and the outlet.

In addition to one or more of the features described above, or as an alternative to any of the foregoing embodiments, a valve fluidly may be coupled between the coolant circuit and the bypass circuit.

In addition to one or more of the features described above, or as an alternative to any of the foregoing embodiments, there may be a third heat exchanger in fluid communication with the bypass circuit.

In addition to one or more of the features described above, or as an alternative to any of the foregoing embodiments, there may be an ambient air channel in fluid communication with third heat exchanger.

In addition to one or more of the features described above, or as an alternative to any of the foregoing embodiments, there may be a bypass duct in fluid communication with the ambient air channel.

In addition to one or more of the features described above, or as an alternative to any of the foregoing embodiments, a thermally neutral heat transfer fluid may be disposed in the coolant circuit.

In addition to one or more of the features described above, or as an alternative to any of the foregoing embodiments, the lubricated engine component may include at least one of a bearing system and a geared architecture.

In yet another embodiment a method of cooling an oil circuit for a gas turbine engine is provided. The method including receiving heated lubricant from an oil circuit at a first heat exchanger; transferring heat from the heated lubricant into a thermally neutral heat transfer fluid coolant circuit using the first heat exchanger; receiving the heated thermally neutral heat transfer fluid at a second heat exchanger; transferring heat from the heated thermally neutral heat transfer fluid into a fuel flow traversing the second heat exchanger; and balancing heat transfer into the fuel flow by diverting a portion of the heated thermally neutral heat transfer fluid into bypass circuit fluidly coupled to the second heat exchanger.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional side elevation view of an exemplary embodiment of a gas turbine engine constructed in accordance with the present disclosure, showing a thermal management system;
Fig. 2 is a schematic view of the thermal management system of Fig. 1, showing an oil circuit, a coolant circuit, and a bypass circuit interconnected with one another through heat exchangers; and
Fig. 3 is a flow diagram of an embodiment a method for balancing heat returned from a lubricated engine component to a core flow path of a gas turbine engine.

### DETAILED DESCRIPTION OF THE PREFERRED EMBODIMENTS

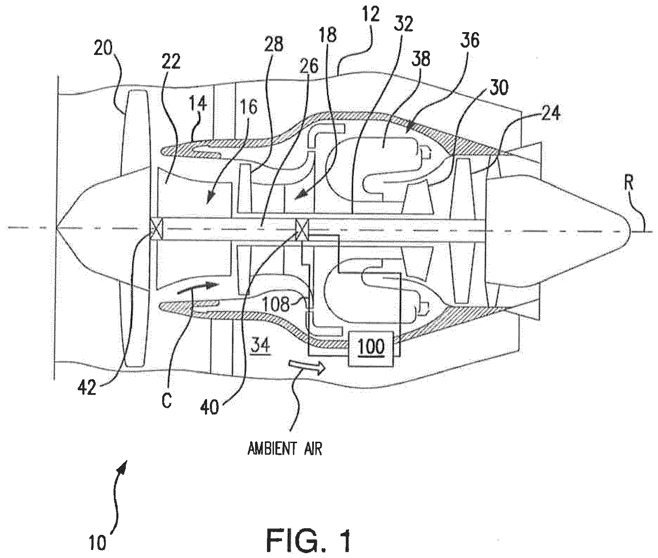

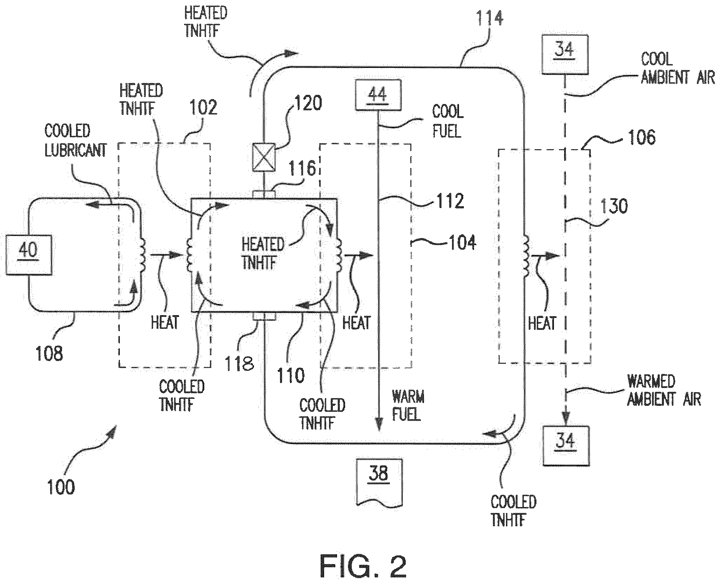

Reference will now be made to the drawings wherein like reference numerals identify similar structural features or aspects of the subject disclosure. For purposes of explanation and illustration, and not limitation, a partial view of an exemplary embodiment of a thermal management system in accordance with the disclosure is shown in Fig. 1 and is designated generally by reference character 100. Other embodiments of thermal management systems in accordance with the disclosure, or aspects thereof, are provided in Figs. 2-3, as will be described. The systems and methods described herein can be used in aircraft main engines and auxiliary power units by way of non-limiting examples.

Gas turbine engine 10 includes a nacelle 12, a case 14, a low-pressure spool 16, and a high-pressure spool 18. Low-pressure spool 16 and high-pressure spool 18 are rotatably supported relative to nacelle 12 and case 14. Low-pressure spool 16 generally includes a fan assembly 20 coupled to a low-pressure compressor assembly 22 and a low-pressure turbine assembly 24 connected by a low-pressure shaft 26. High-pressure spool 18 generally includes high-pressure compressor assembly 28 and a high-pressure turbine assembly 30 connected by a high-pressure shaft 32. Case 14 generally surrounds the low-pressure and high-pressure spool assemblies and defines therebetween a core flow path C extending through gas turbine engine 10. Nacelle 12 defines a bypass duct 34 circumferentially surrounding the case 14 aft of the fan assembly 20.

A combustor section 36 including combustor 38 is arranged axially between high-pressure compressor assembly 28 and high-pressure turbine assembly 30, and fluidly couples high-pressure compressor assembly 28 and high-pressure turbine assembly 30 to form a portion of core flow path C. Combustor 38 receives a flow of fuel, mix the fuel with compressed fluid received from high-pressure compressor assembly 28, ignites the mixture, and generates high-pressure combustion products. The high-pressure combustion products are communicated to high-pressure turbine assembly 30, which expands the high-pressure combustion products, and extracts work therefrom to drive high-pressure compressor assembly 28 using high-pressure shaft 32. High-pressure turbine assembly 30 thereafter communicates the expanded combustion products to low-pressure turbine assembly 24, which further expands the combustion products, extracts further work therefrom, and drives fan assembly 20 and low-pressure compressor assembly 22 using a low-pressure shaft 26. Low-pressure turbine assembly 24 thereafter discharges the combustion products into the environment external to gas turbine engine 10.

As fan assembly 20 rotates ambient air is driven through bypass duct 34. A portion of the ambient air traverses a thermal management system 100 disposed within gas turbine engine 10 for removing heat from gas turbine engine 10. Non-limiting examples of heat sources thermally coupled to thermal management system 100 include bearing systems rotatably supporting low-pressure spool 16 and/or high-pressure spool 18 as well as a gear architecture 42 rotatably coupling fan assembly 20 to low-pressure shaft 26.

With reference to Fig. 2, thermal management system 100 is shown. Thermal management system 100 includes a first heat exchanger 102, a second heat exchanger 104, and a third heat exchanger 106. An oil circuit 108 fluidly couples first heat exchanger 102 with lubricated engine component 40 (i.e. gear architecture 42) such that lubricated engine component 40 is in fluid communication with first heat exchanger 102. A coolant circuit 110 fluidly couples first heat exchanger 102 with second heat exchanger 104, thereby placing second heat exchanger 104 in fluid communication with first heat exchanger 102.

Second heat exchanger 104 includes a fuel conduit 112. Fuel conduit 112 fluidly couples a fuel source 44 with combustor 38 and is in thermal communication with coolant circuit 110 through second heat exchanger 104. Since both oil circuit 108 and coolant circuit 110 are in fluid communication with first heat exchanger 102, this allows for heat to be returned from lubricated engine component 40 into fuel traversing second heat exchanger 104, potentially improving the efficiency of gas turbine engine 10 (shown in Fig. 1).

Thermal management system 100 also includes a bypass circuit 114. Bypass circuit 114 is coupled to coolant circuit 110 between an outlet 116 and an inlet 118 respectively in fluid communication with coolant circuit 110. Bypass circuit 114 is also in fluid communication with third heat exchanger 106. Third heat exchanger includes an air channel 130 and is configured to exchange heat between bypass circuit 114 and air traversing air channel 130. Air channel 130 is in fluid communication with the environment external to gas turbine engine 10 (shown in Fig. 1), and in embodiments is in fluid communication with bypass duct 34 (shown in Fig. 1). In certain embodiments, third heat exchanger 106 is configured as a shunt and routes a portion of ambient air from bypass duct 34 (shown in Fig. 1) through third heat exchanger 106, heating the shunted air using heat transferred from bypass circuit 114, and returning the ambient air as warmed ambient air to the environment external to gas turbine engine 10. This provides a mechanism for rejecting heat that could otherwise cause fuel traversing second heat exchanger 102 to coke within combustor 38.

A bypass valve 120 fluidly couples coolant circuit 110 with bypass circuit 114 and is configured for apportioning a flow of heated thermally neutral heat transfer fluid ("TNHTF") circulating within coolant circuit 110 between coolant circuit 110 and bypass circuit 114. It is contemplated that the thermally neutral heat transfer fluid be a fluid that (a) does not undergo a state change within a predetermined temperature range, and (b) remains chemically stable within the predetermined temperature range. This enables for continuously cycling the thermally neutral heat transfer fluid between temperature extremes that could otherwise break down engine lubricant, thereby avoiding the need to change engine lubricant. It can also provide control of heat transfer between the thermally neutral heat transfer fluid and fuel within the predetermined temperature range due to the graduated (as opposed to stepped) rate of heat transfer within the predetermined temperature range. Non-limiting examples of thermally neutral heat transfer fluids include THERMINOL®, available from Solutia Inc. of St. Louis, Missouri, and DOWTHERM®, available from the Dow Chemical Company of Midland, Michigan.

Apportioning the flow of heated thermally neutral heat transfer fluid between coolant circuit 110 and bypass circuit 114 balances heat transfer from the heated thermally neutral heat transfer fluid between fuel traversing second heat exchanger 104 and ambient air traversing third heat exchanger 106. This can provide control of the temperature increase of fuel traversing second heat exchanger 104, and allows for maintaining the fuel temperature to just below a predetermined temperature limit.

In embodiments, it is contemplated that the predetermined temperature limit excludes temperatures at which fuel could potentially coke within fuel system components. Non-limiting examples of fuel system components potentially subject to coking include fuel lines, fuel nozzles, and internal engine components that may be exposed to engine heat.

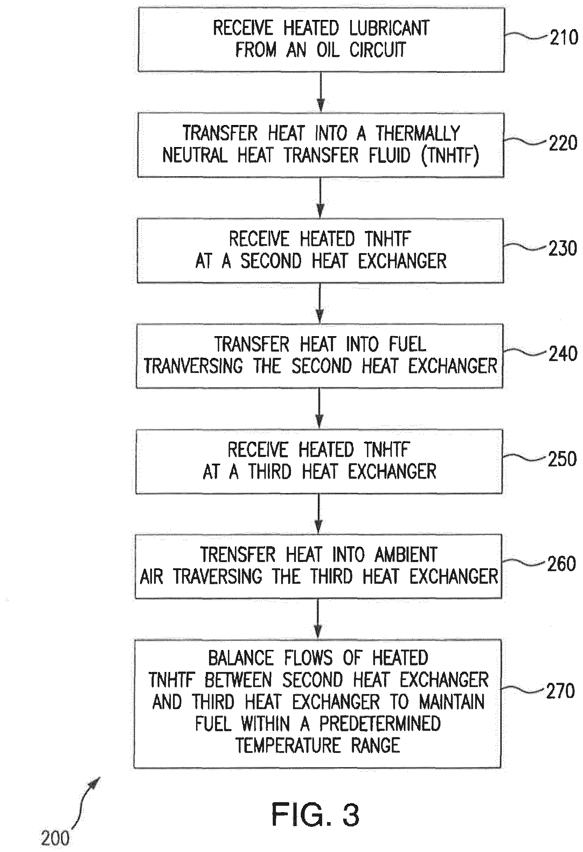

With reference to Fig. 3, a method 200 of cooling an oil circuit for a gas turbine engine, e.g. oil circuit 108, is shown. Method 200 includes receiving heated lubricant from the oil circuit at a first heat exchanger, e.g. first heat exchanger 102, as shown with box 210. Lubricant traversing the oil circuit can be heated by a lubricated engine component, like a gearbox or bearing system. The first heat exchanger cools the lubricant by transferring heat from the lubricant into a thermally neutral heat transfer fluid, as shown with box 220. The cooled lubricant is returned to the oil circuit for recirculation within the oil circuit. The heated thermally neutral heat transfer fluid is provided to a coolant circuit, e.g. coolant circuit 110.

The coolant circuit apportions the received heated thermally neutral heat transfer fluid between a first flow and a second flow. The first flow of thermally neutral heat transfer fluid is provided to a second heat exchanger, e.g. second heat exchanger 104. The second flow of thermally neutral heat transfer fluid is provided to a bypass circuit, e.g. bypass circuit 114, and thereby to a third heat exchanger, e.g. heat exchanger 106. The apportionment may be operation of a flow metering device, like bypass valve 120 for example.

The second heat exchanger receives the first portion of heated thermally neutral heat transfer fluid, as shown with box 230. The second heat exchanger also receives a cool fuel flow (also shown with box 230), transfers heat from the heated thermally neutral heat transfer fluid into the cool fuel flow (shown with box 240), returns the cooled thermally neutral heat transfer fluid to the first heat exchanger, and provides the heated fuel flow to the gas turbine engine. As will be appreciated, this improves the efficiency of the gas turbine engine as the need to heat the fuel flow is reduced commensurate with the amount of heat added to the fuel flow by the second heat exchanger.

The third heat exchanger receives the second portion of heated thermally neutral heat transfer fluid, as shown with box 250. The third heat exchanger also receives an ambient air flow from the environment external to the gas turbine engine (also shown with box 250), transfers heat from the second portion of heated thermally neutral heat transfer fluid into the ambient air flow (shown with box 260), returns the second portion of thermally neutral heat transfer fluid as cooled thermally neutral heat transfer fluid to the coolant circuit, and discharges the ambient air flow as a warmed ambient air flow to the environment external to the gas turbine engine.

Apportioning the flow of heated thermally neutral heat transfer fluid between the coolant circuit and the bypass circuit allows for cooling the heated thermally neutral heat transfer fluid by balancing heat transfer from the thermally neutral heat transfer fluid between fuel flowing to the gas turbine engine and the external environment. As shown with box 270, the balancing can be such that fuel temperature within internal fuel passages of the engine is maintained below a predetermined temperature limit. The predetermined temperature limit can be temperature at which the fuel begins to coke within the internal fuel passages, potentially maximizing the efficiency improvement without potentially impairing engine reliability due to coking within engine internal fuel passages. As will be appreciated, the predetermined temperature limit can be a function of engine power setting, lubricant temperature, fuel temperature, and/or ambient air temperature.

The methods and systems of the present disclosure, as described above and shown in the drawings, provide for gas turbine engines with superior properties including improved efficiency. While the apparatus and methods of the subject disclosure have been shown and described with reference to preferred embodiments, those skilled in the art will readily appreciate that changes and/or modifications may be made thereto without departing from the scope of the appended claims.

## Claims

1. A thermal management system (100) for a gas turbine engine (10) comprising a fuel system, the thermal management system (100) comprising:
a first heat exchanger (102);
an oil circuit (108) in fluid communication with the first heat exchanger (102);
a coolant circuit (110) in fluid communication with the first heat exchanger (102) and in thermal communication with the oil circuit (108) to return heat from the oil circuit (108) to a core flow path of a gas turbine engine (10) using a thermally neutral heat transfer fluid;
a second heat exchanger (104) in fluid communication with the coolant circuit (110);
a fuel conduit (112) in thermal communication with the coolant circuit (110) through the second heat exchanger (104);
a third heat exchanger (106) in fluid communication with the coolant circuit (110);
an ambient air channel (130) in fluid communication with the third heat exchanger (106) and in thermal communication with the coolant circuit (110); and
a lubricated engine component (40) in thermal communication with the oil circuit (108);
**characterized in that** the fuel conduit (112) receives heat from the coolant circuit (110) via the second heat exchanger (104).

2. A thermal management system (100) as recited in claim 1, wherein the lubricated engine component (40) includes at least one of a bearing system and a geared architecture.

3. A thermal management system (100) as recited in claim 1 or 2, wherein the coolant circuit (110) has an inlet (118) and an outlet (116) and further including a bypass circuit (114) fluidly coupled to the inlet (118) and the outlet (116), and optionally, including a valve (120) fluidly coupled between the coolant circuit (110) and the bypass circuit (114), wherein the third heat exchanger (106) is in fluid communication with the coolant circuit (110) through the bypass circuit (114).

4. A gas turbine engine (10), comprising:
a thermal management system (100) as recited in any of claims 1 to 3; and
a lubricated engine component (40) in fluid communication with the oil circuit (108).

5. A gas turbine engine (10) as recited in claim 4, wherein the fuel conduit (112) receives heat from the coolant circuit (110) via the second heat exchanger (104), wherein the fuel conduit (112) is in fluid communication with a combustor (38) of the gas turbine engine (10).

6. A gas turbine engine (10) as recited in claim 4 or 5, wherein the coolant circuit (110) has an inlet (118) and an outlet (116), and further including a bypass circuit (114) fluidly coupled to the inlet (118) and the outlet (116), and optionally including a valve (120) fluidly coupled between the coolant circuit (110) and the bypass circuit (114), wherein the third heat exchanger (106) is in fluid communication with the coolant circuit (110) through the bypass circuit (114).

7. A gas turbine engine (10) as recited in claim 6, further including a bypass duct (34) in fluid communication with the ambient air channel (130).

8. A gas turbine engine (10) as recited in any of claims 4 to 7, further including a thermally neutral heat transfer fluid disposed in the coolant circuit (110).

9. A gas turbine engine (10) as recited in any of claims 4 to 8, wherein the lubricated engine component (40) includes at least one of a bearing system and a geared architecture.

10. A method of cooling an oil circuit (108) for a gas turbine engine (10) comprising a thermal management system according to claim 1, said method further comprising :
receiving heated lubricant from an oil circuit (108) at a first heat exchanger (102), wherein a lubricated engine component (40) is in thermal communication with the oil circuit (108);
transferring heat from the heated lubricant into a thermally neutral heat transfer fluid coolant circuit (110) using the first heat exchanger (102);
receiving the heated thermally neutral heat transfer fluid at a second heat exchanger (104);
transferring heat from the heated thermally neutral heat transfer fluid into a fuel conduit (112) traversing the second heat exchanger (104);
balancing heat transfer into the fuel flow by diverting a portion of the heated thermally neutral heat transfer fluid into bypass circuit (114) fluidly coupled to the second heat exchanger (104);
receiving the portion of heated thermally neutral heat transfer fluid within the bypass circuit (114) at a third heat exchanger (104); and
transferring heat from the portion of heated thermally neutral heat transfer fluid into an ambient air flow traversing the third heat exchanger (106).

11. A method of cooling an oil circuit (108) as claimed in claim 10, wherein the lubricated engine component (40) includes at least one of a bearing system and a geared architecture.

## Patentansprüche

1. Thermisches Managementsystem (100) für ein Gasturbinentriebwerk (10), ein Kraftstoffsystem umfassend, wobei das thermische Managementsystem (100) Folgendes umfasst:
einen ersten Wärmetauscher (102);
einen Ölkreislauf (108), der in Fluidverbindung mit dem ersten Wärmetauscher (102) steht;
einen Kühlmittelkreislauf (110), der in Fluidverbindung mit dem ersten Wärmetauscher (102) steht und in thermischer Verbindung mit dem Ölkreislauf (108) steht, um die Wärme durch Verwenden eines thermisch neutralen Wärmeübertragungsfluids von dem Ölkreislauf (108) zu einem zentralen Strömungspfad eines Gasturbinentriebwerks (10) zurückzuführen;
einen zweiten Wärmetauscher (104), der in Fluidverbindung mit dem Kühlmittelkreislauf (110) steht;
eine Kraftstoffleitung (112), die durch den zweiten Wärmetauscher (104) in thermischer Verbindung mit dem Kühlmittelkreislauf (110) steht;
einen dritten Wärmetauscher (106), der in Fluidverbindung mit dem Kühlmittelkreislauf (110) steht;
einen Umgebungsluftkanal (130), der in Fluidverbindung mit dem dritten Wärmetauscher (106) steht und in thermischer Verbindung mit dem Kühlmittelkreislauf (110) steht; und
eine geschmierte Triebwerkkomponente (40), die in thermischer Verbindung mit dem Ölkreislauf (108) steht;
**dadurch gekennzeichnet, dass** die Kraftstoffleitung (112) über den zweiten Wärmetauscher (104) Wärme von dem Kühlmittelkreislauf (110) empfängt.

2. Thermisches Managementsystem (100) nach Anspruch 1, wobei die geschmierte Triebwerkkomponente (40) mindestens eines von einem Lagersystem und einem Getriebeaufbau beinhaltet.

3. Thermisches Managementsystem (100) nach Anspruch 1 oder 2, wobei der Kühlmittelkreislauf (110) einen Einlass (118) und einen Auslass (116) aufweist und ferner einen Bypasskreislauf (114) beinhaltet, der an den Einlass (118) und den Auslass (116) fluidgekoppelt ist, und wahlweise ein Ventil (120) beinhaltet, das zwischen den Kühlmittelkreislauf (110) und den Bypasskreislauf (114) fluidgekoppelt ist, wobei der dritte Wärmetauscher (106) durch den Bypasskreislauf (114) in Fluidverbindung mit dem Kühlmittelkreislauf (110) steht.

4. Gasturbinentriebwerk (10), Folgendes umfassend:
ein thermisches Managementsystem (100) nach einem der Ansprüche 1 bis 3; und
eine geschmierte Triebwerkkomponente (40), die in Fluidverbindung mit dem Ölkreislauf (108) steht.

5. Gasturbinentriebwerk (10) nach Anspruch 4, wobei die Kraftstoffleitung (112) über den zweiten Wärmetauscher (104) Wärme von dem Kühlmittelkreislauf (110) empfängt, wobei die Kraftstoffleitung (112) in Fluidverbindung mit einer Brennkammer (38) des Gasturbinentriebwerks (10) steht.

6. Gasturbinentriebwerk (10) nach Anspruch 4 oder 5, wobei der Kühlmittelkreislauf (110) einen Einlass (118) und einen Auslass (116) aufweist, und ferner einen Bypasskreislauf (114) beinhaltet, der an den Einlass (118) und an den Auslass (116) fluidgekoppelt ist, und wahlweise ein Ventil (120) beinhaltet, das zwischen den Kühlmittelkreislauf (110) und den Bypasskreislauf (114) fluidgekoppelt ist, wobei der dritte Wärmetauscher (106) durch den Bypasskreislauf (114) in Fluidverbindung mit dem Kühlmittelkreislauf (110) steht.

7. Gasturbinentriebwerk (10) nach Anspruch 6, ferner einen Bypasskanal (34) beinhaltend, der in Fluidverbindung mit dem Umgebungsluftkanal (130) steht.

8. Gasturbinentriebwerk (10) nach einem der Ansprüche 4 bis 7, ferner ein thermisch neutrales Wärmeübertragungsfluid beinhaltend, dass in dem Kühlmittelkreislauf (110) angeordnet ist.

9. Gasturbinentriebwerk (10) nach einem der Ansprüche 4 bis 8, wobei die geschmierte Triebwerkkomponente (40) mindestens eines von einem Lagersystem und einem Getriebeaufbau beinhaltet.

10. Verfahren zum Kühlen eines Ölkreislaufs (108) für ein Gasturbinentriebwerk (10), ein thermisches Managementsystem nach Anspruch 1 umfassend, wobei das Verfahren ferner Folgendes umfasst:
Empfangen von erwärmtem Schmiermittel von einem Ölkreislauf (108) an einem ersten Wärmetauscher (102), wobei eine geschmierte Triebwerkkomponente (40) in thermischer Verbindung mit dem Ölkreislauf (108) steht;
Übertragen von Wärme von dem erwärmten Schmiermittel an einen Kühlmittelkreislauf (110) mit thermisch neutralem Wärmeübertragungsfluid durch Verwenden des ersten Wärmetauschers (102);
Empfangen des erwärmten thermisch neutralen Wärmeübertragungsfluids an einem zweiten Wärmetauscher (104);
Übertragen von Wärme von dem erwärmten thermisch neutralen Wärmeübertragungsfluid an eine Kraftstoffleitung (112), die den zweiten Wärmetauscher (104) durchläuft;
Ausgleichen einer Wärmeübertragung an den Kraftstoffstrom durch Umleiten eines Teils des erwärmten thermisch neutralen Wärmeübertragungsfluids in einen Bypasskreislauf (114), der an den zweiten Wärmetauscher (104) fluidgekoppelt ist;
Empfangen des Teils von erwärmtem thermisch neutralem Wärmeübertragungsfluid innerhalb des Bypasskreislaufs (114) an einem dritten Wärmetauscher (104); und
Übertragen von Wärme von dem Teil des erwärmten thermisch neutralen Wärmeübertragungsfluids an einen Umgebungsluftstrom, der den dritten Wärmetauscher (106) durchläuft.

11. Verfahren zum Kühlen eines Ölkreislaufs (108) nach Anspruch 10, wobei die geschmierte Triebwerkkomponente (40) mindestens eines von einem Lagersystem und einem Getriebeaufbau beinhaltet.

## Revendications

1. Système de gestion thermique (100) pour un moteur à turbine à gaz (10) comprenant un système d'alimentation en carburant, le système de gestion thermique (100) comprenant :
un premier échangeur de chaleur (102) ;
un circuit d'huile (108) en communication fluidique avec le premier échangeur de chaleur (102) ;
un circuit de réfrigérant (110) en communication fluidique avec le premier échangeur de chaleur (102) et en communication thermique avec le circuit d'huile (108) pour renvoyer la chaleur du circuit d'huile (108) vers un trajet de flux primaire d'un moteur à turbine à gaz (10) au moyen d'un fluide de transfert de chaleur thermiquement neutre ;
un deuxième échangeur de chaleur (104) en communication fluidique avec le circuit de réfrigérant (110) ;
un conduit de carburant (112) en communication thermique avec le circuit de réfrigérant (110) à travers le deuxième échangeur de chaleur (104) ;
un troisième échangeur de chaleur (106) en communication fluidique avec le circuit de réfrigérant (110) ;
un canal d'air ambiant (130) en communication fluidique avec le troisième échangeur de chaleur (106) et en communication thermique avec le circuit de réfrigérant (110) ; et
un composant de moteur lubrifié (40) en communication thermique avec le circuit d'huile (108) ;
**caractérisé en ce que** le conduit de carburant (112) reçoit de la chaleur du circuit de réfrigérant (110) via le deuxième échangeur de chaleur (104).

2. Système de gestion thermique (100) selon la revendication 1, dans lequel le composant de moteur lubrifié (40) inclut au moins l'un d'un système de palier et d'une architecture engrenée.

3. Système de gestion thermique (100) selon la revendication 1 ou 2, dans lequel le circuit de réfrigérant (110) a une entrée (118) et une sortie (116) et incluant en outre un circuit de dérivation (114) couplé fluidiquement à l'entrée (118) et à la sortie (116), et incluant éventuellement une soupape (120) couplée fluidiquement entre le circuit de réfrigérant (110) et le circuit de dérivation (114), dans lequel le troisième échangeur de chaleur (106) est en communication fluidique avec le circuit de réfrigérant (110) par le biais du circuit de dérivation (114).

4. Moteur à turbine à gaz (10) comprenant :
un système de gestion thermique (100) selon l'une quelconque des revendications 1 à 3 ; et
un composant de moteur lubrifié (40) en communication fluidique avec le circuit d'huile (108).

5. Moteur à turbine à gaz (10) selon la revendication 4, dans lequel le conduit de carburant (112) reçoit de la chaleur du circuit de réfrigérant (110) via le deuxième échangeur de chaleur (104), dans lequel le conduit de carburant (112) est en communication fluidique avec une chambre de combustion (38) du moteur à turbine à gaz (10).

6. Moteur à turbine à gaz (10) selon la revendication 4 ou 5, dans lequel le circuit de réfrigérant (110) a une entrée (118) et une sortie (116), et incluant en outre un circuit de dérivation (114) couplé fluidiquement à l'entrée (118) et à la sortie (116), et incluant éventuellement une soupape (120) couplée fluidiquement entre le circuit de réfrigérant (110) et le circuit de dérivation (114), dans lequel le troisième échangeur de chaleur (106) est en communication fluidique avec le circuit de réfrigérant (110) par le biais du circuit de dérivation (114).

7. Moteur à turbine à gaz (10) selon la revendication 6, incluant en outre un conduit de dérivation (34) en communication fluidique avec le canal d'air ambiant (130).

8. Moteur à turbine à gaz (10) selon l'une quelconque des revendications 4 à 7, incluant en outre un fluide de transfert de chaleur thermiquement neutre disposé dans le circuit de réfrigérant (110).

9. Moteur à turbine à gaz (10) selon l'une quelconque des revendications 4 à 8, dans lequel le composant de moteur lubrifié (40) inclut au moins l'un d'un système de palier et d'une architecture engrenée.

10. Procédé de refroidissement d'un circuit d'huile (108) pour un moteur à turbine à gaz (10) comprenant un système de gestion thermique selon la revendication 1, ledit procédé comprenant en outre :
la réception de lubrifiant chauffé à partir d'un circuit d'huile (108) au niveau d'un premier échangeur de chaleur (102), dans lequel un composant de moteur lubrifié (40) est en communication thermique avec le circuit d'huile (108) ;
le transfert de chaleur à partir du lubrifiant chauffé dans un circuit de réfrigérant (110) de fluide de transfert de chaleur thermiquement neutre au moyen du premier échangeur de chaleur (102) ;
la réception du fluide de transfert de chaleur thermiquement neutre au niveau d'un deuxième échangeur de chaleur (104) ;
le transfert de chaleur à partir du fluide de transfert de chaleur thermiquement neutre chauffé dans un conduit de carburant (112) traversant le deuxième échangeur de chaleur (104) ;
l'équilibrage du transfert de chaleur dans le flux de carburant en déviant une partie du fluide de transfert de chaleur thermiquement neutre chauffé dans le circuit de dérivation (114) couplé fluidiquement au deuxième échangeur de chaleur (104) ;
la réception de la partie du fluide de transfert de chaleur thermiquement neutre chauffé à l'intérieur du circuit de dérivation (114) au niveau d'un troisième échangeur de chaleur (104) ; et
le transfert de chaleur de la partie de fluide de transfert de chaleur thermiquement neutre chauffé dans un flux d'air ambiant traversant le troisième échangeur de chaleur (106).

11. Procédé de refroidissement d'un circuit d'huile (108) selon la revendication 10, dans lequel le composant de moteur lubrifié (40) inclut au moins l'un d'un système de palier et d'une architecture engrenée.
